(19) Europäisches Patentamt / European Patent Office / Office européen des brevets

(11) **EP 3 930 387 B1**

(12) **EUROPEAN PATENT SPECIFICATION**

(45) Date of publication and mention
of the grant of the patent:
**28.08.2024 Bulletin 2024/35**

(21) Application number: **19915690.2**

(22) Date of filing: **22.02.2019**

(51) International Patent Classification (IPC):
**H04W 52/16** *(2009.01)*    **H04W 52/36** *(2009.01)*

(52) Cooperative Patent Classification (CPC):
**H04W 52/16; H04W 52/367;** H04W 52/146

(86) International application number:
**PCT/JP2019/006915**

(87) International publication number:
**WO 2020/170457 (27.08.2020 Gazette 2020/35)**

(54) **TERMINAL, AND WIRELESS COMMUNICATION CONTROL METHOD**

ENDGERÄT UND DRAHTLOSES KOMMUNIKATIONSSTEUERUNGSVERFAHREN

TERMINAL ET PROCÉDÉ DE COMMANDE DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.12.2021 Bulletin 2021/52**

(73) Proprietor: **NTT DOCOMO, INC.**
**Chiyoda-Ku**
**Tokyo 100-6150 (JP)**

(72) Inventors:
• **OGUMA, Yuta**
  **Tokyo 100-6150 (JP)**
• **UMEDA, Hiromasa**
  **Tokyo 100-6150 (JP)**

(74) Representative: **Hoffmann Eitle**
**Patent- und Rechtsanwälte PartmbB**
**Arabellastraße 30**
**81925 München (DE)**

(56) References cited:
• RAN4: "[DRAFT] LS on P-Max indication for FR2", vol. RAN WG4, no. Spokane, WA, USA; 20181112 - 20181116, 11 November 2018 (2018-11-11), XP051559094, Retrieved from the Internet <URL:http://www.3gpp.org/ftp/Meetings%5F3GP P%5FSYNC/RAN4/Docs/R4%2D1814722%2Ezip > [retrieved on 20181111]
• ERICSSON: "P-Max indication for FR2", vol. TSG RAN, no. Spokane, WA, USA; 20181112 - 20181116, 11 November 2018 (2018-11-11), XP051559093, Retrieved from the Internet <URL:http://www.3gpp.org/ftp/Meetings%5F3GP P%5FSYNC/RAN4/Docs/R4%2D1814721%2Ezip > [retrieved on 20181111]
• NTT DOCOMO ET AL: "Introduction P-max to Pcmax in FR2", vol. RAN WG4, no. Athens, Greece; 20190225 - 20190301, 15 February 2019 (2019-02-15), XP051605559, Retrieved from the Internet <URL:http://www.3gpp.org/ftp/tsg%5Fran/WG4 %5FRadio/TSGR4%5F90/Docs/R4%2D1900858% 2Ezip> [retrieved on 20190215]
• ERICSSON: "P-Max indication for FR 2", 3GPP TSG RAN WG4 #89 R4-1814721, 16 November 2018 (2018-11-16), XP051559093
• ERICSSON: "P-Max value range", 3GPP TSG RAN WG2 #104 R2-1817148, 16 November 2018 (2018-11-16), XP051556690
• "3rd Generation Partnership Project; Technical Specification Group Radio Access Network; NR; User Equipment (UE) radio transmission and reception; Part 2: Range 2 Standalone (Release 15)", 3GPP STANDARD; TECHNICAL SPECIFICATION; 3GPP TS 38.101-2, vol. RAN WG4, no. V15.4.0, 15 January 2019 (2019-01-15), Mobile Competence Centre ; 650, route des Lucioles ; F-06921 Sophia-Antipolis Cedex ; France, pages 1 - 131, XP051591748

**Description**

Technical Field

The present disclosure relates to a terminal and a radio communication control method.

Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.
NPL 2 relates to a P-max indication for FR2, in particular to a power-class dependent offset to P-max.
NPL 3 relates to a P-max indication for FR2, in particular to details of a power-class dependent offset to P-max.
NPL 4 relates to P-max and Pcmax in FR2, in particular to P-max specified as peak EIRP metric.

Citation List

Non-Patent Literature

NPL 1
3GPP TS 38.331 v15.4.0, "Radio Resource Control (RRC) protocol specification (Release 15)," December 2018
NPL2
RAN4: "[DRAFT] LS on P-Max indication for FR2", 3GPP DRAFT; R4-1814722,
NPL3
ERICSSON: "P-Max indication for FR2", 3GPP DRAFT; R4-1814721
NPL4
NTT DOCOMO ET AL: "Introduction P-max to Pcmax in FR2",3GPP DRAFT; R4-1900858

Summary of Invention

Technical Problem

In a radio communication system, a radio communication apparatus (e.g., a terminal) is capable of reducing interference with other equipment by configuring transmit power.
However, depending on a frequency band used by the radio communication system, appropriate configuration of the transmit power is sometimes not performed.
An objective of the present disclosure is to achieve appropriate configuration of transmit power depending on a frequency band used in a radio communication system.

Solution to Problem

The invention is defined by the independent claims. Preferred embodiments are defined by the dependent claims. Further examples are provided for facilitating the understanding of the invention.

Advantageous Effects of Invention

According to the present disclosure, it is possible to achieve appropriate configuration of transmit power depending on a frequency band used in a radio communication system.

Brief Description of Drawings

FIG. 1 illustrates exemplary Power classes and transmit power;

FIG. 2 is a block diagram illustrating an example of a configuration of a base station according to an example;

FIG. 3 is a block diagram illustrating an example of a configuration of a terminal according to an example;

FIG. 4 is a table illustrating an example of a correspondence relationship of information relevant to transmit power in an example; and

FIG. 5 illustrates an example of a hardware configuration of the base station and the terminal according to an example.

Detailed Description

Hereinafter, an example according to one aspect of the present disclosure will be described with reference to the accompanying drawings.

In NR, a broader band of frequencies including frequencies of an existing LTE frequency band and being broader than the LTE frequency band is utilized. For example, in NR, the frequency band is divided into two frequency bands, called Frequency Range 1

(FR1) and Frequency Range 2 (FR2). FR1 denotes a frequency band of 6 GHz or less. FR1 is also referred to as Sub 6. FR2 denotes a higher frequency band than the frequency band of FR1, and includes a millimeter wave band, for example.

Information on transmit power is specified for radio communication that uses the existing LTE frequency band and NR FR1. For example, when the base station configures the terminal with the transmit power, information of which the base station notifies the terminal is specified. The information on the transmit power includes, for example, a parameter indicative of an upper limit value of the transmit power called P-max.

Hereinafter, the LTE frequency band may be referred to as "LTE band." Further, NR FR1 and NR FR2 may hereinafter be referred to as "FR1" and "FR2," respectively. In addition, the LTE band and/or NR FR1 may hereinafter be referred as "LTE/FR1."

For example, in a radio communication system supporting communication in LTE/FR1 (hereinafter, referred to as "LTE/FR1 communication"), the base station notifies the terminal of P-max in a case where the transmit power of the terminal is to be reduced in a place where precision equipment which may be affected by a radio wave is used (e.g., a hospital) or for adjustment of interference with another system. The terminal controls the transmit power based on P-max, for example, within a range where the transmit power is equal to or less than P-max.

For example, in Radio Access Network (RAN) 2 of 3rd Generation Partnership Project (3GPP), P-max in LTE/FR1 is specified. Hereinbelow, P-max specified in RAN2 may be referred to as "P-max_1."

For example, the range of possible values of P-max_1 is from -30 [dBm] through 33 [dBm]. Further, any value incremented by 1 [dB] in the range of from -30 [dBm] through 33 [dBm] is configured as P-max_1. In other words, the increment amount (or step size) of the value of P-max_1 is 1 [dB].

Note that, in the following, the range of possible values of P-max_1 may be abbreviated as "range of P-max_1." In addition, in the following, the increment amount (or step size) of the value of P-max may be described as "granularity." For example, the granularity of P-max_1 described above is 1 [dB]. In addition, a range in which the increment amount of the value is relatively small may be described as a "range in which the granularity is relatively fine," and a range in which the increment amount of the value is relatively large may be described as a "range in which the granularity is relatively coarse."

Radio communication systems supporting FR2 (e.g., millimeter-wave band) communications have also been studied in terms of transmit power.

For example, Power classes of the transmit power have been studied for FR2 (e.g., millimeter-wave band).

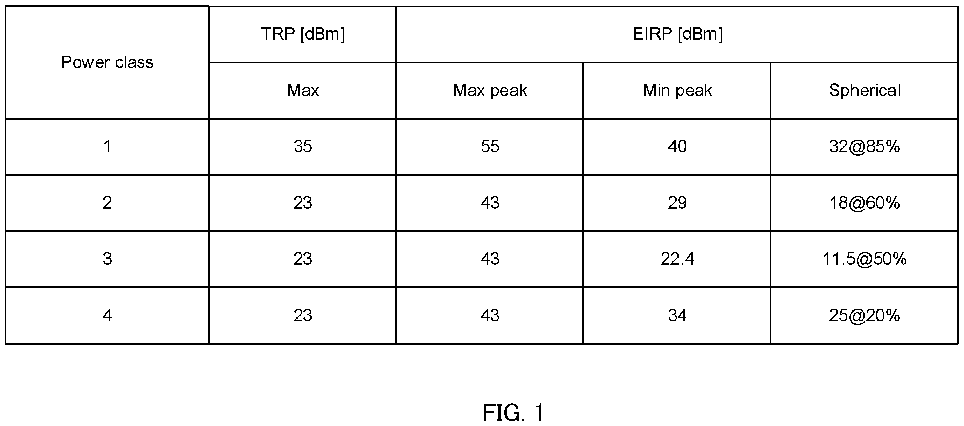

FIG. 1 illustrates an example of Power classes and transmit power. By way of example, FIG. 1 illustrates four Power classes (PC), the maximum value of Total Radiated Power (TRP), the maximum value of a peak (Max peak) and the minimum value of a peak (Min peak) of Equivalent Isotropic Radiated Power (EIRP), and the spherical coverage (Spherical) specified for each PC.

As illustrated in FIG. 1, for example, in Power class 1 (PC1), the maximum value of Total Radiated Power (TRP) is 35 [dBm], and the maximum value of the peak (Max peak) of Equivalent Isotropic Radiated Power (EIRP) is 55 [dBm]. These PC1 maximum values are not included in the range of P-max_1 (e.g., from -30 [dBm] through 33 [dBm]). In addition, in PC2 to PC4 illustrated in FIG. 1, values not included in the range of P-max_1 exist as in the case of PC1.

Moreover, the range of the transmit power in FR2 (e.g., maximum value of transmit power) may be extended further than in the example illustrated in FIG. 1. Since the range of the transmit power in FR2 cannot be covered by the range of P-max_1 as described above, a contrivance or an improvement is studied in order to apply P-max_1 to the configuration of the transmit power of the terminal supporting the FR2 communication.

In the present example, as one example, a technique will be described which enables appropriate configuration of the transmit power in FR2 by associating P-max in LTE/FR1 with the information on the transmit power in FR2.

[Configurations of Base Station and Terminal]

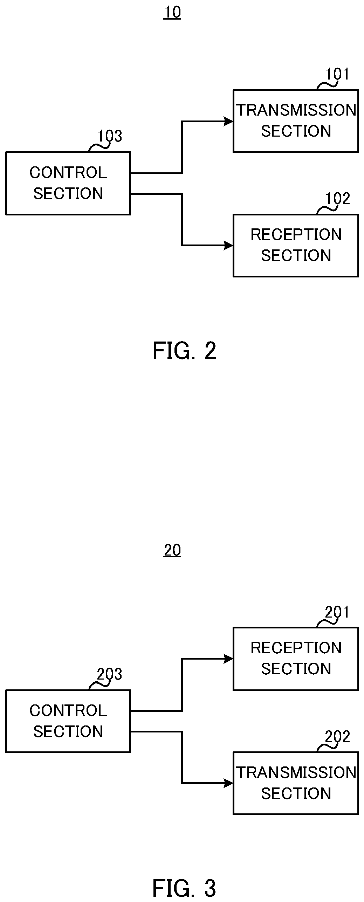

FIG. 2 is a block diagram illustrating an example of the configuration of base station 10 according to the present example. Base station 10 includes, for example, transmission section 101, reception section 102, and control section 103.

Base station 10 according to the present example communicates with terminal 20 (see FIG. 3) in FR2. Note that, base station 10 according to the present example may communicate with terminal 20 in the LTE band and/or FR1. Note also that the base station communicating with terminal 20 in the LTE band, the base station communicating with terminal 20 in FR1, and the base station communicating with terminal 20 in FR2 may be different base stations. Alternatively, the base station may support part or all of the LTE-band communication, FR1 communication, and FR2 communication.

Transmission section 101 transmits a downlink (DL) signal for terminal 20 to terminal 20. For example, transmission section 101 transmits the DL signal in FR2 under the control of control section 103. Note that, when base station 10 is capable of communicating with terminal 20 in the LTE band and/or FR1, transmission section 101 may transmit the DL signal in the LTE band and/or FR1 under the control of control section 103.

The DL signal may include information on the transmit power of terminal 20. The information on the transmit power may be P-max_1 described above. For example, transmission section 101 may transmit the DL signal including P-max_1 in FR2. Note that, when base station 10 is capable of communicating with terminal 20 in the LTE band and/or FR1, transmission section 101 may transmit the DL signal including P-max_1 in the band in which the communication is possible, for example.

Reception section 102 receives an uplink (UL) signal transmitted from terminal 20. For example, reception section 102 receives the UL signal in FR2 under the control of control section 103. Note that, when base station 10 is capable of communicating with terminal 20 in the LTE band and/or FR1, reception section 102 may receive the UL signal in the LTE band and/or FR1 under the control of control section 103.

Control section 103 controls transmission processing of transmission section 101 and reception processing of reception section 102. For example, control section 103 receives data, control information, and the like from a higher layer (not illustrated), and outputs the data, the control information, and the like to transmission section 101. Control section 103 also outputs data, control information, and the like received from reception section 102 to the higher layer.

Control section 103 may configure terminal 20 with the information on the transmit power in FR2. For example, control section 103 may configure the upper limit value of the transmit power in FR2, and may output P_max_1 associated with the configured upper limit value of the transmit power to transmission section 101.

FIG. 3 is a block diagram illustrating an example of the configuration of terminal 20 according to the present example. Terminal 20 includes reception section 201, transmission section 202, and control section 203, for example.

Terminal 20 according to the present example communicates with base station 10 in FR2. Note that, terminal 20 according to the present example may communicate with base station 10 in the LTE band and/or FR1.

Terminal 20 may be connected to base station 10 supporting the LTE-band and/or FR1 communication and to base station 10 supporting the FR2 communication, for example, via Dual Connectivity (DC).

Reception section 201 receives a DL signal transmitted from base station 10. For example, reception section 201 receives the DL signal in FR2 under the control of control section 203. Note that, when terminal 20 is capable of communicating with base station 10 in the LTE band and/or FR1, reception section 201 may receive the DL signal in the LTE band and/or FR1 under the control of control section 203.

Transmission section 202 transmits a UL signal to base station 10. For example, transmission section 202 transmits the UL signal in FR2 under the control of control section 203. Note that, when terminal 20 is capable of communicating with base station 10 in the LTE band and/or FR1, transmission section 202 may transmit the UL signal in the LTE band and/or FR1 under the control of control section 203.

Control section 203 controls a communication operation including reception processing of reception section 201 and transmission processing of transmission section 202. For example, control section 203 receives data, control information, and the like from a higher layer (not illustrated), and outputs the data, the control information, and the like to transmission section 202. Control section 203 also outputs data, control information, and the like received from reception section 201 to the higher layer.

Control section 203 detects P-max_1 included in the DL signal. Control section 203 controls the transmit power of the UL signal in FR2 based on the information on the transmit power in FR2, which is associated with P-max_1. For example, control section 203 configures the upper limit value of the transmit power in FR2 based on the correspondence relationship between P-max_1 and the upper limit value of the transmit power in FR2. Control section 203 controls the uplink transmit power in FR2 based on the upper limit value of the configured transmit power.

Next, the correspondence relationship between P-max_1 and the upper limit value of the transmit power in FR2 will be described. Hereinafter, the parameter indicative of the upper limit value of the transmit power in FR2 may be described as "P-max_2."

It is assumed that the range of P-max_1 is different from the range of possible values of P-max_2 (hereinafter, "range of P-max _2"). Regarding the correspondence relationship in the present example, a description will be given of an example of a correspondence relationship between P-max_2 and P-max_1 on the assumption that the range of P-max_2 is wider than the range of P-max_1.

The correspondence relationship between P-max_2 and P-max_1 is expressed by Equation 1, for example. Note that, in Equation 1 and below-described Equation 2, P-max_2 and P-max_1 are described as "P_max_2" and "P_max_1," respectively.

$$P\_max\_2 =$$
$$If \ p\_\theta1 \le P\_max\_1 \le p\_\theta max, \ then, \ \Delta\_1 \times P\_max\_1 + P\_offset1$$
$$If \ p\_\theta2 \le P\_max\_1 < p\_\theta1, \ then, \ \Delta\_2 \times P\_max\_1 + P\_offset2$$
$$If \ p\_\theta min \le P\_max\_1 < p\_\theta2, \ then, \ \Delta\_3 \times P\_max\_1 + P\_offset3$$

$$\dots \quad (Equation \ 1)$$

In Equation 1, p_θmin and p_θmax denote the minimum value and the maximum value of the range of P-max_1, respectively. For example, when the range of P-max_1 is from -30 [dBm] through 33 [dBm], p_θmin and p_θmax are -30 [dBm] and 33 [dBm], respectively.

In addition, p_θ1 and p_θ2 indicate boundary values. Boundary values p_θ1 and p_θ2 divide the range of P-max_1 into ranges in which the granularity of P-max_2 associated with P-max_1 is changed. Note that the magnitude relationship of p_θmin < p_θ2 < p_θ1 < p_θmax may hold true among p_θmax, p_θmin, p_θ1, and p_θ2.

In addition, Δ_1, Δ_2, and Δ_3 indicate the granularity of P-max_2. The terms of Δ_1, Δ_2, and Δ_3 may be different from one another, or at least two of them may be the same.

Further, P_offset1, P_offset2, and P_offset3 indicate offsets, respectively. The offsets may be configured, for example, based on the maximum value, boundary values, and granularity of the range of possible values of each of P-max_2 and P-max_1.

Note that, the unit of the parameter in Equation 1 including P-max_1 and P-max_2 may be [dBm]. In addition, in the following description, the unit may be omitted.

Equation 1 represents an example of the correspondence relationship in which two boundary values p_θ1 and p_θ2 divide the range of P-max_1 into three ranges, and a different granularity is configured for P-max_2 associated with each of the three divided ranges. However, the present disclosure is not limited thereto, and for example, one, two, four or more granularities may be configured. For example, when two granularities are configured, the number of boundary values may be one, and when four or more granularities are configured, the number of boundary values may be three or more. Further, when one granularity is configured, the boundary value does not have to be configured.

Note that, Equation 1 indicates an example in which P-max_2 is represented by a first order equation of P-max_1, but the present disclosure is not limited to this example. For example, P-max_2 may be represented by a higher order equation than the first order equation of P-max_1, or may be represented by a non-linear equation of P-max_1.

Further, at least a part of the parameters included in the equation (e.g., Equation 1) representing the correspondence relationship may be dynamically configured. For example, the dynamically configured parameters may be configured by base station 10 and indicated from base station 10 to terminal 20. Alternatively, the dynamically configured parameters may be configured by terminal 20 and indicated from terminal 20 to base station 10. The dynamically configured parameters may also be implicitly indicated to base station 10 or terminal 20 in association with other information.

In addition, a plurality of correspondence relationships may be dynamically switched. For example, base station 10 may determine to switch the correspondence relationships, and notify terminal 20 of information indicating the switching. Terminal 20 may configure the transmit power by using the switched correspondence relationship based on the notified information. For example, terminal 20 may decide to switch the correspondence relationships, and notify base station 10 of information indicating the switching. Base station 10 may configure terminal 20 with the transmit power by using the switched correspondence relationship based on the notified information. The information indicating the switching may be implicitly indicated to base station 10 or terminal 20 by being associated with other information.

Alternatively, base station 10 may switch the correspondence relationships based on information indicated by terminal 20. In this case, the information indicated by terminal 20 may be information indicating Capability of terminal 20 (e.g., information of Power Class (PC)).

Note that the notification from base station 10 to terminal 20 for dynamic configuration and/or dynamic switching may be performed using, for example, Downlink Control Information (DCI) or higher layer signaling (e.g., Radio Resource Control (RRC) signaling). Note also that, the notification from terminal 20 to base station 10 for dynamic configuration and/or dynamic switching may be performed using, for example, Uplink Control Information (UCI) or higher layer signaling (e.g., Radio Resource Control (RRC) signaling).

Next, the correspondence relationship represented by Equation 1 will be described using an example of numerical values. Note that, the present disclosure is not limited to the numerical examples described below.

By way of example, the correspondence relationship in which the range of P-max_1 is from -30 through 33 and the range of P-max_2 is from -30 through 65 is illustrated. For example, in this example, the correspondence relationship between P-max_2 and P-max_1 is represented by, for example, Equation 2 in the case of $p\_\theta1$ = -16, $p\_\theta2$ = -24, $\Delta\_1$ = 1, $\Delta\_2$ = 2, $\Delta\_3$ = 5, P_offset1 = 32, P_offset2 = 48, and P_offset3 = 120.

$$P\_\max\_2 =$$
$$If\ -16 \leq P\_\max\_1 \leq 33,\ then,\ 1 \times P\_\max\_1 + 32$$
$$If\ -24 \leq P\_\max\_1 < -16,\ then,\ 2 \times P\_\max\_1 + 48 \qquad \dots (Equation\ 2)$$
$$If\ -30 \leq P\_\max\_1 < -24,\ then,\ 5 \times P\_\max\_1 + 120$$

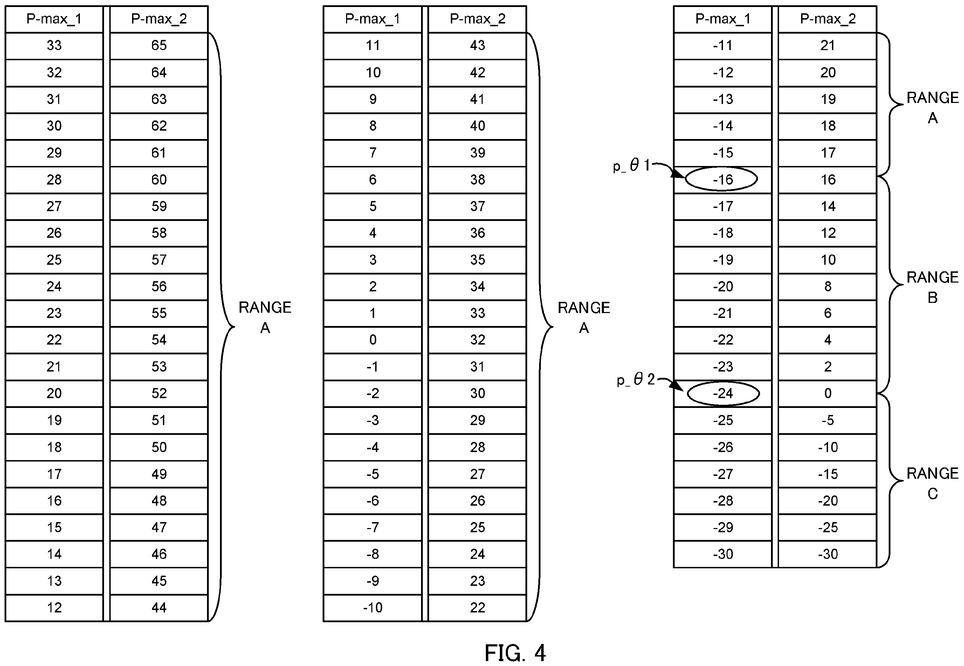

The correspondence relationship between P-max_2 and P-max_1 based on Equation 2 is described in the form of a table. FIG. 4 is the table illustrating the example of the correspondence relationship of information on transmit power in the present example.

Note that, FIG. 4 illustrates one table that represents the correspondence relationship between P-max_2 and P-max_1 as divided into three parts.

As illustrated in FIG. 4, P-max_1 incremented by one in the range of from -16 through 33 (range A in FIG. 4) within the range of P-max_1 is associated with P-max_2 incremented by one in the range of from 16 through 65. For example, since P-max_2 associated with P-max_1 of -15 is 17 and P-max_2 associated with P-max_1 of -16 is 16, the difference between the two values of P-max_2 is 1. In this range, the granularity of P_max_2 is 1.

In addition, the granularity of P-max_2 is changed at the boundary of $p\_\theta1$ = -16. For example, since P-max_2 associated with P-max_1 of -16 is 16 and P-max_2 associated with P-max_1 of -17 is 14, the difference between the two values of P-max_2 is 2.

P-max_1 incremented by one in the range of from -24 through -16 (range B in FIG. 4) within the range of P-max_1 is associated with P-max_2 incremented by two in the range of from 0 through 16. For example, since P-max_2 associated with P-max_1 of -23 is 2 and P-max_2 associated with P-max_1 of -24 is 0, the difference between the two values of P-max_2 is 2.

The granularity of P-max_2 is changed at the boundary of $p\_\theta2$ = -24. For example, since P-max_2 associated with P-max_1 of -24 is 0 and P-max_2 associated with P-max_1 of -25 is -5, the difference between the two values of P-max_2 is 5.

The values incremented by one in the range of from -30 through -24 (range C) within the range of P-max_1 are associated respectively with the values of P-max_2 incremented by five in the range of from -30 through 0. For example, since P-max_2 associated with P-max_1 of -29 is -25 and P-max_2 associated with P-max_1 of -30 is -30, the difference between the two values of P-max_2 is 5.

In FIG. 4, the granularities of P-max_2 in range A, range B, and range C are different from one another. The granularity of P-max_2 in range A is finer than the granularities of P-max_2 in ranges B and C, and the granularity of P-max_2 in range B is finer than the granularity of P-max_2 in range C. Further, in FIG. 4, the granularity of P-max_2 in range A is the same as the granularity of P-max_1, and the granularity of P-max_2 in range B and the granularity of P-max_2 in range C are different from the granularity of P-max_1.

In addition, in FIG. 4, the granularity is set to 1 in the range (e.g., range A) including the maximum value of P-max_2 of 65 and the values close to 65, while the granularity is set to 5 in the range (e.g., range C) including the minimum value of P-max_2 of -30 and the values close to -30, for example.

In the present example, as illustrated in FIG. 4, a finer granularity may be set to the range including the maximum value of P-max_2 and the values close to the maximum value than to the other ranges. For example, the granularity of the range including the maximum value of P-max_2 may be finer than the granularity of the range not including the maximum value of P-max_2 among a plurality of ranges divided by the boundary values.

Such configuration of the granularity makes it possible to finely set relatively greater values of the transmit power in configuration of the transmit power for terminal 20 supporting the FR2 communication.

Further, as illustrated in FIG. 1, in PC1, the Max peak of EIRP is specified as 55 [dBm], and in PC2 to PC4, the Max peak of EIRP is specified as 43 [dBm]. The Max peaks of EIRP specify exemplary upper limit values of the transmit power.

In FIG. 4, the granularity is set to 1 in the range (e.g., range A) including P-max_2 of 55 corresponding to the Max peak of EIRP in PC1 and the values close to 55. In addition, the granularity is set to 1 in the range (e.g., range A) including P-max_2 of 43 corresponding to the Max peak of EIRP in PC2 to PC4 and the values close to 43. On the other hand, the granularity is set to 5, for example, in the range (e.g., range C) including the minimum value of P-max_2 of -30 and the values close to -30.

In the present example, as illustrated in FIG. 4, a finer granularity may be set to the range including a specific value of P-max_2 and a value close to the specific value than to the other ranges. For example, the granularity of the range including a specific value of P-max_2 may be finer than the granularity of the range not including the specific value of P-max_2 among a plurality of ranges divided by the boundary values. Note that, the specific value is not limited to the value of P-max_2 corresponding to the Max peak of EIRP described above.

Such configuration of the granularity makes it possible to finely set neighboring values of a specific value (for example, a value corresponding to Max peak of EIRP of each PC) in configuration of the transmit power to terminal 20 supporting the FR2 communication.

For example, reception section 201 of terminal 20 in the above-described example receives a first parameter (e.g., P-max_1) relevant to the transmit power in a first frequency band (e.g., LTE band and/or FR1). Then, for example, control section 203 controls uplink transmit power in a second frequency band (e.g., FR2) based on a second parameter (e.g., P-max_2) that is associated with the first parameter and is relevant to the transmit power in the second frequency band. With such control, it is possible to achieve the appropriate configuration of the transmit power depending on the frequency band.

Further, in the above-described example, a finer granularity is set to a range including relatively larger P-max_2. In the communication between terminal 20 and base station 10, the communication quality can be improved by increasing the transmit power as much as possible. Therefore, a high transmit power configuration corresponding to large P-max_2 may be demanded more highly than a low transmit power configuration corresponding to small P-max_2. Note that, being highly demanded may correspond to being frequently used.

In the present example, a finer granularity is set to the range including highly demanded P-max_2 than to the range including less demanded P-max _2, and it is thus possible to configure the transmit power finely for the highly demanded range. Therefore, it is possible to improve the flexibility of configuration of the transmit power depending on a demand.

Further, according to the present example, it is possible to achieve appropriate configuration of the transmit power in FR2 without changing the range (or definition) of the values of P-max specified in RAN2 (above-described P-max_1). It is thus possible to avoid an impact on development of base stations and terminals that would occur when the range of P-max is changed.

In addition, the range of configuration of the transmit power in FR2 can be covered, and further, future changes (for example) of the range can also be covered. It is thus possible to configure the transmit power in FR2 flexibly.

For example, when the configuration of the upper limit value of the transmit power in FR2 is achieved by uniformly adding a fixed offset to P-max_1, it is difficult to cover both the maximum value and the minimum value of possible values of the transmit power in FR2. In contrast, in the present example, both the upper limit value and the lower limit value of the transmit power in FR2 can be covered by using different granularities in the correspondence relationship between P-max_1 and the transmit power in FR2 (P-max_2 described above).

Note that, the above example has been described in relation to the example in which the smaller the P-max_2 is, the coarser the granularity is set, but the present disclosure is not limited to this example. For example, the smaller the P-max_2 is, the finer the granularity may be set. For example, when the transmit power of terminal 20 is frequently controlled at a low level or when controlling the transmit power at a low level is highly demanded, the smaller the P-max_2 is, the finer the granularity may be set.

In addition, for example, the granularity of the range including relatively small P-max_2 and the granularity of the range including relatively large P-max_2 may be finer or coarser than the granularity of the range excluding these ranges among a plurality of ranges divided by the boundary values. Here, the range including relatively small P-max_2 is, for example, a range including the possible minimum value of P-max_2. Also, the range including relatively large P-max_2 is, for example, a range including the possible maximum value of P-max_2.

In addition, the above example has been described in relation to the example in which P-max_2 is associated with P-max_1 in descending order of P-max_2 and P-max_1, but the present disclosure is not limited thereto. For example, P-max_2 may be associated with P-max_1 in descending order of P-max_2 and in ascending order of P-max_1. Further, P-max_1 and P-max_2 may be unordered.

Further, the above example has been described in relation to the example in which all values in the range of P-max_1 are associated with values of P-max _2, but the present disclosure is not limited thereto. For example, a part of the values of P-max_1 may not be associated with P-max_2. In this case, a value of P-max_1 that is not associated with P-max_2 may be blank or may be associated with other information. For example, when the value of P-max_1 that is not associated with P-max_2 is blank, base station 10 may not use the blank of P-max_1.

Further, the above example has been described in relation to the example in which the entire range of P-max_2 including the possible maximum value and the possible minimum value is associated with P-max_1, but the present disclosure is not limited thereto. For example, a part of P-max_2 may not be associated with P-max_1. For example, based on the difference in demand, a part of P-max_2 may be punctured. For example, by puncturing relatively less demanded values of P-max_2, the granularity of relatively highly demanded values of P-max_2 can be finely configured.

Further, in the above-described example, for example, when base station 10 supports both the FR1 and FR2 communications and indicates a change of the frequency band to terminal 20, base station 10 may notify terminal 20 of information indicating the change of the frequency band. In this case, the information indicating the change of the frequency band may be associated with the information indicating the correspondence relationship between P-max_2 and P-max_1.

Further, a plurality of frequency bands included in FR2 may be configured respectively in association with correspondence relationships between P-max_2 and P-max_1. For example, each of the correspondence relationships between P-max_2 and P-max_1 may be configured depending on frequency characteristics of each frequency band. When base station 10 indicates, to terminal 20, the change of the frequency band among a plurality of frequency bands included in FR2, base station 10 may notify terminal 20 of information indicative of the change of the frequency band. In this case, terminal 20 may determine the correspondence relationship between P-max_2 and P-max_1 in the frequency band based on the information indicative of the change of the frequency band.

For example, the correspondence relationship between P-max_2 and P-max_1 may be changed depending on the frequency band. For example, a correspondence relationship to be configured for a frequency band where attenuation of a signal is large, causing the transmission distance of the signal to be shortened (hereinafter, referred to as frequency band #A) may be different from a correspondence relationship to be configured to a frequency band where the transmission distance is longer than that in frequency band #A (hereinafter, referred to as frequency band #B). The attenuation of the signal is caused, for example, by the influence of moisture and/or gas in the atmosphere.

For example, the granularity of the correspondence relationship configured for frequency band #B may be finer than the granularity of the correspondence relationship configured for frequency band #A. With this configuration of the granularity, the transmit power can be finely configured in frequency band #B where the attenuation of the signal is relatively small and the transmission distance is long.

Further, for example, the range of P-max_2 may be limited in the correspondence relationship configured for frequency band #A. Since the attenuation is large in frequency band #A, it is assumed that relatively small values in the range of P-max_2 are less demanded. Accordingly, in the correspondence relationship configured for frequency band #A, the range of P-max_2 may be limited to a range in which the relatively small values (e.g., a minimum value and its neighboring values) are not included. Further, in this case, the granularity may be configured more finely depending on the limitation on the range. With this configuration of the correspondence relationship, it is possible to configure the correspondence relationship dependent on the demand in frequency band #A, so as to change the configuration of the transmit power flexibly. Note that, in the correspondence relationship configured for frequency band #B, the range of P-max_2 may be limited to a range in which relatively large values (for example, a maximum value and its neighboring values) are not included, and the granularity may be configured more finely depending on the limitation on the range.

In addition, the frequency bands to which the present disclosure is applied are not limited to the LTE band, FR1, and FR2, and the present disclosure may be applied to a case where information on the transmit power is specified for each different frequency band.

Note that, in the above example, the numerical example in the range of P-max_1 and the numerical example in the range of P-max_2 are illustrated, but the present disclosure is not limited thereto. For example, the range of P-max_2 may not encompass the entire range of P-max_1. For example, the range of P-max_2 may encompass at least a part of the range of P-max_1, or may not encompass the range of P-max_1.

Further, in the above-described example, "configuring P-max_2 based on the correspondence relationship between P-max_1 and P-max_2" may correspond to, for example, replacing P-max_1 with P-max_2, converting P-max_1 to P-max_2, or exchanging P-max_1 with P-max_2 in accordance with a predetermined rule. Further, for example, the predetermined rule may be above-described Equation 1 or the like. The correspondence relationship between P-max_2 and P-max_1 may be called a mapping pattern of P-max_2 and P-max_1. Also, "associating P-max_2 with P-max_1" may correspond to "relating P-max_2 to P-max_1" or "mapping P-max_2 to P-max_1."

Further, in the above-described example, that "terminal 20 receives P-max_1" may correspond to, for example, that "terminal 20 receives notification of P-max_1" or that "terminal 20 detects P-max_1." In addition, the word "detect" may be replaced with other expressions such as "find out," "recognize," "identify," and the like.

Further, in the above-described example, "P-max," "P-max_1," and "P-max_2" may be replaced with other expressions. For example, "P-max," "P-max_1," and "P-max_2" may be replaced with other expressions of the information (parameters) on the transmit power. For example, "P-max_1" and "P-max_2" in the above-described example may be replaced with "P-Max" and "$P_{EMAX,C}$," respectively.

(Hardware Configuration)

Note that, the block diagrams used to describe the above example illustrate blocks on a function-by-function basis. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit," "transmission section," or "transmitter." The methods for implementing the functions are not limited specifically as described above.

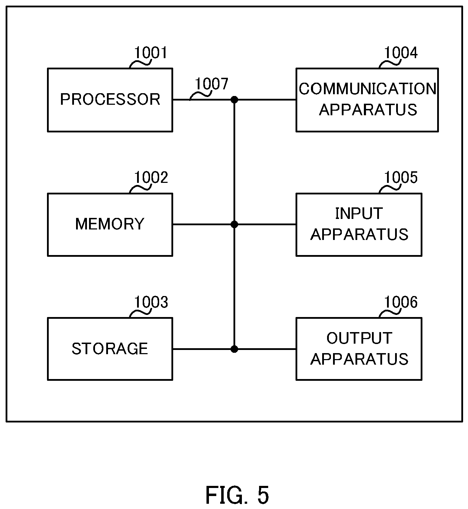

For example, the base station, terminal, and the like according to an example of the present disclosure may function as a computer that executes processing of a radio communication method of the present disclosure. FIG. 5 illustrates an exemplary hardware configuration of the base station and the terminal according to one example of the present disclosure. Physically, base station 10 and terminal 20 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of base station 10 and of terminal 20 may include one apparatus or a plurality of apparatuses illustrated in the drawings or may not include part of the apparatuses.

The functions of base station 10 and terminal 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103, control section 203, and the like described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above examples is used. For example, control section 103 of base station 10 control section 203 of terminal 20 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an example of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, transmission section 202, and the like described above may be implemented using communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, base station 10 and terminal 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

(Notification of Information and Signaling)

The notification of information is not limited to the aspects or examples described in the present disclosure, and the information may be notified by another method. For example, the notification of information may be carried out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

(Applied System)

The aspects and examples described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

(Processing Procedure and the like)

The orders of the processing procedures, the sequences, the flow charts, and the like of the aspects and examples described in the present disclosure may be changed as long as there is no contradiction. For example, elements of various steps are presented in exemplary orders in the methods described in the present disclosure, and the methods are not limited to the presented specific orders.

(Operation of Base Station)

Specific operations which are described in the present disclosure as being performed by the base station may sometimes be performed by an upper node depending on the situation. Various operations performed for communication with a terminal in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

(Direction of Input and Output)

The information or the like (see the item of "Information and Signals") can be output from a higher layer (or a lower layer) to a lower layer (or a higher layer). The information, the signals, and the like may be input and output through a plurality of network nodes.

(Handling of Input and Output Information and the like)

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

(Determination Method)

The determination may be made based on a value expressed by one bit (0 or 1), based on a Boolean value (true or false), or based on comparison with a numerical value (for example, comparison with a predetermined value).

(Software)

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

(Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

("System" and "Network")

The terms "system" and "network" used in the present disclosure can be interchangeably used.

(Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example PUCCH and PDCCH) and information elements, can be identified by any suitable names, and various names assigned to these various channels and information elements are not limitative in any respect.

(Base Station (Radio Base Station))

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," "component carrier," and the like may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

(Terminal)

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

(Base Station/Mobile Station)

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user terminal. For example, the aspects and the examples of the present disclosure may find application in a configuration that results from replacing communication between the base station and the user terminal with communication between multiple user terminals (such communication may, e.g., be referred to as device-to-device (D2D), vehicle-to-everything (V2X), or the like). In this case, terminal 20 may be configured to have the functions that base station 10 described above has. The wordings "uplink" and "downlink" may be replaced with a corresponding wording for inter-equipment communication (for example, "side"). For example, an uplink channel, a downlink channel, and the like may be replaced with a side channel.

Similarly, the terminal in the present disclosure may be replaced with the base station. In this case, base station 10 is configured to have the functions that terminal 20 described above has.

(Meaning and Interpretation of Terms)

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

The reference signal can also be abbreviated as an RS and may also be called as a pilot depending on the applied standard.

The description "based on" used in the present disclosure does not mean "based only on," unless otherwise specified. In other words, the description "based on" means both of "based only on" and "based at least on."

Any reference to elements by using the terms "first," "second," and the like does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

The "section" in the configuration of each apparatus may be replaced with "means," "circuit," "device," or the like.

In a case where terms "include," "including," and their modifications are used in the present disclosure, these terms are intended to be inclusive like the term "comprising." Further, the term "or" used in the present disclosure is not intended to be an exclusive or.

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on a TTI-by-TTI basis to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

In a case where articles, such as "a," "an," and "the" in English, for example, are added in the present disclosure by translation, nouns following these articles may have the same meaning as used in the plural.

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

(Variations and the like of Aspects)

The aspects and examples described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the examples described in the present disclosure. Modifications and variations of the aspects of the present disclosure can be made without departing from the scope of the present disclosure defined by the appended claims. Therefore, the description of the present disclosure is intended for exemplary description and does not limit the present disclosure in any sense.

Industrial Applicability

One aspect of the present disclosure is useful for a mobile communication system. Reference Signs List

10 Base station
20 Terminal
101, 202 Transmission section
102, 201 Reception section
103, 203 Control section

**Claims**

1. A terminal (20) comprising:

a reception section (201) configured to receive a first parameter, wherein a range of possible values of the first parameter cannot cover a range of transmit power in a frequency band; and
a control section (203) configured to control uplink transmit power in the frequency band based on a second parameter, wherein the second parameter is an upper limit value of a transmit power for the frequency band, the second parameter is calculated based on the first parameter, and a range of possible values of the second parameter is wider than the range of possible values of the first parameter.

2. The terminal (20) according to claim 1, wherein
granularity of at least a part of the possible values of the second parameter is different from granularity of the possible values of the first parameter.

3. The terminal (20) according to claim 1, wherein
granularity of the possible values of the second parameter is different in a part or all of a plurality of regions resulting from division of the range of the possible values of the second parameter.

4. A radio communication control method, comprising a step performed by a terminal (20) of:

receiving a first parameter, wherein a range of possible values of the first parameter cannot cover a range of transmit power in a frequency band;
controlling uplink transmit power in the frequency band based on a second parameter, wherein the second parameter is an upper limit value of a transmit power for the frequency band, the second parameter is calculated based on the first parameter, and a range of possible values of the second parameter is wider than the range of possible values of the first parameter.

**Patentansprüche**

1. Endgerät (20), umfassend:

einen Empfangsabschnitt (201), der so konfiguriert ist, dass er einen ersten Parameter empfängt, wobei ein Bereich möglicher Werte des ersten Parameters einen Bereich der Sendeleistung in einem Frequenzband nicht abdecken kann; und
einen Steuerabschnitt (203), der so konfiguriert ist, dass er eine Aufwärtsverbindungssendeleistung in dem Frequenzband basierend auf einem zweiten Parameter steuert, wobei der zweite Parameter ein oberer Grenzwert einer Sendeleistung für das Frequenzband ist, der zweite Parameter basierend auf dem ersten Parameter berechnet wird und ein Bereich möglicher Werte des zweiten Parameters größer ist als der Bereich möglicher Werte des ersten Parameters.

2. Endgerät (20) nach Anspruch 1, wobei
eine Granularität von mindestens einem Teil der möglichen Werte des zweiten Parameters sich von einer Granularität der möglichen Werte des ersten Parameters unterscheidet.

3. Endgerät (20) nach Anspruch 1, wobei
eine Granularität der möglichen Werte des zweiten Parameters sich in einem Teil oder allen von einer Vielzahl von Bereichen, die sich aus einer Unterteilung des Bereichs der möglichen Werte des zweiten Parameters ergeben, unterscheidet.

4. Funkkommunikationssteuerungsverfahren, umfassend einen von einem Endgerät (20) durchgeführten Schritt von

Empfangen eines ersten Parameters, wobei ein Bereich möglicher Werte des ersten Parameters einen Bereich der Sendeleistung in einem Frequenzband nicht abdecken kann;
Steuern einer Aufwärtsverbindungssendeleistung in dem Frequenzband basierend auf einem zweiten Parameter, wobei der zweite Parameter ein oberer Grenzwert einer Sendeleistung für das Frequenzband ist, der zweite Parameter basierend auf dem ersten Parameter berechnet wird und ein Bereich möglicher Werte des zweiten Parameters größer ist als der Bereich möglicher Werte des ersten Parameters.

**Revendications**

1. Terminal (20), comprenant :

   une section de réception (201) configurée pour recevoir un premier paramètre, dans lequel une plage de valeurs possibles du premier paramètre ne peut pas couvrir une plage de puissance de transmission dans une bande de fréquence ; et
   une section de commande (203) configurée pour commander la puissance de transmission de liaison montante dans la bande de fréquence sur la base d'un second paramètre, dans lequel le second paramètre est une valeur limite supérieure d'une puissance de transmission pour la bande de fréquence, le second paramètre est calculé sur la base du premier paramètre, et une plage de valeurs possibles du second paramètre est plus large que la plage de valeurs possibles du premier paramètre.

2. Terminal (20) selon la revendication 1, dans lequel
   la granularité d'au moins une partie des valeurs possibles du second paramètre est différente de la granularité des valeurs possibles du premier paramètre.

3. Terminal (20) selon la revendication 1, dans lequel
   la granularité des valeurs possibles du second paramètre est différente dans une partie ou dans la totalité d'une pluralité de régions résultant de la division de la plage des valeurs possibles du second paramètre.

4. Procédé de commande de radiocommunication, comprenant une étape mise en oeuvre par un terminal (20) consistant à

   recevoir un premier paramètre, dans lequel une plage de valeurs possibles du premier paramètre ne peut pas couvrir une plage de puissance de transmission dans une bande de fréquence ;
   commander la puissance de transmission de liaison montante dans la bande de fréquence sur la base d'un second paramètre, dans lequel le second paramètre est une valeur limite supérieure d'une puissance de transmission pour la bande de fréquence, le second paramètre est calculé sur la base du premier paramètre, et une plage de valeurs possibles du second paramètre est plus large que la plage de valeurs possibles du premier paramètre.

| Power class | TRP [dBm] | EIRP [dBm] | | |
|---|---|---|---|---|
| | Max | Max peak | Min peak | Spherical |
| 1 | 35 | 55 | 40 | 32@85% |
| 2 | 23 | 43 | 29 | 18@60% |
| 3 | 23 | 43 | 22.4 | 11.5@50% |
| 4 | 23 | 43 | 34 | 25@20% |

FIG. 1

10

FIG. 2

20

FIG. 3

| P-max_1 | P-max_2 |
|---|---|
| 33 | 65 |
| 32 | 64 |
| 31 | 63 |
| 30 | 62 |
| 29 | 61 |
| 28 | 60 |
| 27 | 59 |
| 26 | 58 |
| 25 | 57 |
| 24 | 56 |
| 23 | 55 |
| 22 | 54 |
| 21 | 53 |
| 20 | 52 |
| 19 | 51 |
| 18 | 50 |
| 17 | 49 |
| 16 | 48 |
| 15 | 47 |
| 14 | 46 |
| 13 | 45 |
| 12 | 44 |

RANGE A

| P-max_1 | P-max_2 |
|---|---|
| 11 | 43 |
| 10 | 42 |
| 9 | 41 |
| 8 | 40 |
| 7 | 39 |
| 6 | 38 |
| 5 | 37 |
| 4 | 36 |
| 3 | 35 |
| 2 | 34 |
| 1 | 33 |
| 0 | 32 |
| -1 | 31 |
| -2 | 30 |
| -3 | 29 |
| -4 | 28 |
| -5 | 27 |
| -6 | 26 |
| -7 | 25 |
| -8 | 24 |
| -9 | 23 |
| -10 | 22 |

RANGE A

| P-max_1 | P-max_2 | |
|---|---|---|
| -11 | 21 | RANGE A |
| -12 | 20 | |
| -13 | 19 | |
| -14 | 18 | |
| -15 | 17 | |
| -16 | 16 | p_$\theta$1 |
| -17 | 14 | RANGE B |
| -18 | 12 | |
| -19 | 10 | |
| -20 | 8 | |
| -21 | 6 | |
| -22 | 4 | |
| -23 | 2 | |
| -24 | 0 | p_$\theta$2 |
| -25 | -5 | RANGE C |
| -26 | -10 | |
| -27 | -15 | |
| -28 | -20 | |
| -29 | -25 | |
| -30 | -30 | |

FIG. 4

EP 3 930 387 B1

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Radio Resource Control (RRC) protocol specification (Release 15). *3GPP TS 38.331 v15.4.0,* December 2018
- **RAN4.** DRAFT] LS on P-Max indication for FR2. *3GPP DRAFT; R4-1814722*
- **ERICSSON.** P-Max indication for FR2. *3GPP DRAFT; R4-1814721*
- **NTT DOCOMO et al.** Introduction P-max to Pcmax in FR2. *3GPP DRAFT; R4-1900858*